Europäisches Patentamt

European Patent Office

Office européen des brevets

(19)

(11) **EP 0 945 489 B1**

(12) **FASCICULE DE BREVET EUROPEEN**

(45) Date de publication et mention
de la délivrance du brevet:
**25.08.2004 Bulletin 2004/35**

(51) Int Cl.$^7$: **C08L 23/04**, C08F 10/02

(21) Numéro de dépôt: **99400605.4**

(22) Date de dépôt: **12.03.1999**

(54) **Polymère de l'éthylène pour l'extrusion couchage**

Ethylenpolymere für Schichtextrusion

Ethylene polymers for layered extrusion

(84) Etats contractants désignés:
**AT BE DE ES FI FR GB IT NL SE**

(30) Priorité: **23.03.1998 FR 9803530**

(43) Date de publication de la demande:
**29.09.1999 Bulletin 1999/39**

(73) Titulaire: **Atofina**
**92800 Puteaux (FR)**

(72) Inventeurs:
• **Bou-Gerard, Madeleine**
**64110 Rontignon (FR)**

• **El Bounia, Nour-Eddine**
**64300 Sainte Suzanne (FR)**

(74) Mandataire: **Leyder, Francis**
**Atofina Research S.A.**
**Département Propriété Industrielle**
**Zone Industrielle C**
**7181 Feluy (BE)**

(56) Documents cités:
**EP-A- 0 409 615       US-A- 3 380 978**
**US-A- 3 875 134       US-A- 4 229 416**
**US-A- 4 282 339       US-A- 4 287 262**
**US-A- 4 496 698       US-A- 5 100 978**
**US-A- 5 112 696**

**Description**

L'invention concerne une composition comprenant deux polymères haute pression de l'éthylène pour l'extrusion couchage.

L'extrusion couchage est un procédé permettant de couvrir en continu une bande d'un support tel qu'un papier, carton, feuille d'aluminium, feuille de polymère par exemple en polyester (PET), par une couche d'un matériau thermoplastique. Le matériau thermoplastique est extrudé par une filière plate sur le support défilant à haute vitesse.

Dans ce procédé, le matériau thermoplastique est extrudé en film par une filière plate et mis en contact sur le support défilant à haute vitesse sous la filière. L'ensemble matériau thermoplastique / support est alors pressé par un rouleau en caoutchouc contre un cylindre refroidisseur (appelé "chill-roll" en anglais) entraînant, par refroidissement, la solidification et la fixation du matériau extrudé sur le support. L'ensemble est ensuite dirigé vers une bobine d'enroulement.

Le support revêtu trouve des applications par exemple pour réaliser des briques de lait ou de jus de fruit, de papier de boucherie, des enveloppes de serviettes rafraîchissantes.

Différents problèmes peuvent survenir lors du fonctionnement de ce procédé.

En sortie de filière, le film de matériau thermoplastique peut avoir tendance à vibrer (phénomène dit de "draw resonance" en anglais). Les vibrations ne doivent pas être si fortes qu'elles conduisent à la cassure du film en cours de tirage. Les polyéthylènes linéaires présentent l'inconvénient de vibrer fortement en extrusion couchage.

La nappe extrudée a tendance à diminuer de largeur sous l'effet du tirage qu'elle subit. Cette rétractation (appelé Neck-In en anglais) doit être réduite au minimum de façon à ce que les bords du support soient le moins possible non recouverts par le matériau thermoplastique.

La nappe de matériau thermoplastique peut être extrudée à grande vitesse mais il existe généralement une vitesse maximale d'étirement pour laquelle on observe sa cassure. Cette vitesse maximale est également appelée étirabilité limite.

La demande de brevet internationale WO 96/16119 décrit une composition pour extrusion couchage comprenant 75 à 95 % d'un interpolymère linéaire éthylène/$\alpha$-oléfine fabriqué par un procédé en solution, et 5 à 25 % en poids d'un polyéthylène haute pression. Une telle composition fait appel à une forte proportion d'interpolymère linéaire et présente un comportement vibrant marqué.

La composition selon l'invention peut ne pas comprendre d'interpolymère linéaire ou substantiellement linéaire tel qu'un interpolymère éthylène/a-oléfine linéaire ou substantiellement linéaire. Elle présente une faible tendance à la rétractation et une forte étirabilité.

La composition selon l'invention comprend :

- un polymère de l'éthylène fabriqué par le procédé autoclave, ci-après appelé polyéthylène autoclave,
- un polymère de l'éthylène fabriqué par le procédé tubulaire, ci-après appelé polyéthylène tubulaire.

Les procédés autoclave et tubulaire font tous deux partie des procédés de polymérisation dits "haute pression" et l'homme du métier comprend immédiatement ce dont il est question. Ces deux procédés font intervenir la polymérisation de l'éthylène par voie radicalaire sous haute pression, généralement comprise entre 100 et 350 MPa et à des températures supérieures à la température de fusion du polyéthylène en formation. Le procédé tubulaire fait intervenir la polymérisation dans un réacteur tubulaire. Un réacteur tubulaire comprend des cylindres dont le diamètre interne est généralement compris entre 1 et 10 cm et dont la longueur va généralement de 0,1 à 3 km. Dans un réacteur tubulaire, le milieu réactionnel est animé d'une grande vitesse linéaire, généralement supérieure à 2 mètres par seconde et des temps de réaction courts, pouvant par exemple être compris entre 0,1 et 5 min.

Le brevet US 4,496,698 décrit l'utilisation d'un réacteur autoclave et d'un réacteur tubulaire en série. Un tel procédé ne permet pas de régler des conditions de polymérisation suffisamment différentes dans les deux réacteurs, notamment la pression, et mène à des produits présentant une faible étirabilité limite. Dans le cadre de la présente invention, le polyéthylène autoclave et le polyéthylène tubulaire sont réalisés indépendamment l'un de l'autre, c'est-à-dire par des procédés indépendants.

La pression dans le réacteur tubulaire peut par exemple être comprise entre 200 et 350 MPa, de préférence entre 210 et 280 MPa, par exemple de 230 à 250 MPa. La température dans le réacteur tubulaire peut aller de 120 à 350°C et de préférence de 150 à 300°C.

Le procédé autoclave fait intervenir la polymérisation dans un autoclave dont le rapport longueur / diamètre va généralement de 1 à 25 dans le cas d'un réacteur à zone unique. Dans le cas d'un réacteur à zones multiples, le rapport longueur de chaque zone / diamètre va généralement de 0,5 à 6, étant entendu que le milieu réactionnel s'écoule dans le sens de la longueur. La pression dans le réacteur autoclave peut par exemple être comprise entre 100 et 250 MPa, de préférence entre 120 et 180 MPa, par exemple de 140 à 170 MPa. La température dans le réacteur autoclave peut aller de 180 à 300°C et de préférence de 240 à 290°C.

La composition selon l'invention peut par exemple comprendre 95 % à 30 % en poids de polyéthylène autoclave et 5 à 70 % en poids de polyéthylène tubulaire.

La distribution des masses moléculaires du polyéthylène autoclave apparaît généralement bimodale en chromatographie d'exclusion stérique, ce qui inclut le cas où elle présente seulement un net épaulement, la population de molécules située vers les fortes masses et constituant l'une des deux populations de particules générant un pic ou épaulement de moindre intensité que la population de molécules située vers les faibles masses.

La distribution des masses moléculaires du polyéthylène tubulaire apparaît essentiellement monomodale en chromatographie d'exclusion stérique.

La polymolécularité, c'est-à-dire le rapport de la masse moléculaire moyenne en poids sur la masse moléculaire moyenne en nombre du polyéthylène autoclave et du polyéthylène tubulaire peut aller de 4,5 à 15, mesurée en équivalent polyéthylène linéaire en chromatographie d'exclusion stérique.

Le rapport du taux de branchement g' du polyéthylène tubulaire sur le taux de branchement g' du polyéthylène autoclave est supérieur à 1,5.

Le taux de branchement g' du polyéthylène autoclave va de 0,20 à 0,40. Le taux de branchement g' du polyéthylène tubulaire va de 0,43 à 0,70.

De préférence, les indices de fusion $MI_2$ du polyéthylène tubulaire et du polyéthylène autoclave peuvent aller de 3 à 20 g /10 min, l'indice de fusion étant mesuré à 190°C sous une charge de 2,16 kg selon la norme ISO 3011.

De préférence, les densités du polyéthylène tubulaire et du polyéthylène autoclave peuvent aller de 0,915 à 0,933.

La force à rupture d'un jonc des polyéthylène tubulaire et autoclave est généralement comprise entre 10 et 45 cN. Cette force à rupture (melt strength en anglais) peut être déterminée à l'aide d'un système de tirage Goettfert Rheotens et d'une extrudeuse Haake Rhécord 90 équipée d'une vis 19/25D avec un taux de compression de 2. La filière utilisée a un diamètre de 3 mm et un rapport L/D de 6. Les rouleaux du Rhéotens sont placés en dessous et à la verticale de la filière à une distance de 110 mm. La vitesse de vis est comprise entre 18 et 20 tr/min pour un débit de 13,5 g/min. En sortie de filière, lorsque le jonc de polymère fondu arrive au système Rhéotens, il est étiré avec une accélération égale à 3 mm/s$^2$.

Si les indices de fusion $MI_2$ du polyéthylène tubulaire et du polyéthylène autoclave sont voisins, c'est-à-dire que leur rapport est compris entre 0,9 et 1,1, la force à rupture d'un jonc en polyéthylène autoclave est supérieure à celle d'un jonc en polyéthylène tubulaire, et l'étirabilité limite du polyéthylène autoclave est inférieur à celle du polyéthylène tubulaire.

Le terme polymère recouvre les homopolymères et les interpolymères, ces derniers recouvrant les copolymères et les terpolymères.

Ainsi, les polymères de l'éthylène entrant dans la composition selon l'invention peuvent être obtenus par polymérisation radicalaire de l'éthylène en présence d'un comonomère pouvant être choisi parmi les comonomères comprenant une insaturation éthylénique en α ou β tels que par exemple l'acide acrylique, l'acide méthacrylique, l'acrylate de méthyle, l'acétate de vinyle, le propylène, le butène, le pentène, l'hexène, l'octène.

Les polyéthylènes autoclave et tubulaire peuvent être des homopolyéthylènes.

La composition selon l'invention est obtenue par malaxage en fusion des ingrédients utilisés pour la constituer, grâce aux techniques connues de l'homme du métier.

En extrusion couchage, la composition selon l'invention mène généralement à une rétractation inférieure à la rétractation théorique, c'est-à-dire celle à laquelle on s'attendrait en calculant la moyenne arithmétique des rétractations de chacun des polymères de l'éthylène utilisés.

Ainsi, si :

- $R_{TUB}$ désigne la rétractation observée lors de l'extrusion couchage du polyéthylène tubulaire,
- (TUB) désigne la masse de polyéthylène tubulaire contenue dans la composition selon l'invention,
- $R_{AUT}$ désigne la rétractation observée lors de l'extrusion couchage du polyéthylène autoclave,
- (AUT) désigne la masse de polyéthylène autoclave contenue dans la composition selon l'invention, la rétractation théorique Rth dans le cas de la composition selon l'invention est définie par la relation :

$$Rth = \frac{[R_{TUB} \times (TUB)] + [R_{AUT} \times (AUT)]}{(TUB) + (AUT)}$$

Si $R_{COMP}$ désigne la rétractation réelle observée dans le cas de la composition selon l'invention, on a généralement la relation suivante :

$$R_{COMP} < R_{th}$$

La composition selon l'invention peut servir à revêtir un support par extrusion couchage. Ce support revêtu peut servir à la réalisation d'articles tels que par exemple des briques de lait ou de jus de fruit, du papier de boucherie, des enveloppes de serviettes rafraîchissantes.

La distribution des masses moléculaires et les taux de branchement des polyéthylènes sont déterminés à partir de mesures en chromatographie d'exclusion stérique. Selon cette technique, une solution de polymère très diluée est injectée dans la colonne du chromatographe, remplie de billes de gel présentant une large distribution des pores. En sortie de colonne, on dispose d'un réfractomètre pour mesurer la concentration et d'un viscosimètre pour mesurer la viscosité.

Le chromatographe ayant été utilisé pour les exemples est un WATERS 150CV (Waters, Milford, USA) fonctionnant à 145°C. Le viscosimètre dont est équipé cet appareil est de type "simple capillaire". Le jeu de colonne utilisé est constitué d'une seule colonne remplie de gel de styrène-divinylbenzène dont la distribution de tailles de pores est large (PL-gel "mixed B" 10 $\mu$m, 60 cm x 7,5 mm). Cette colonne est commercialisée par POLYMER LABORATORIES (Church Stretton, UK). L'éluant est le 1,2,4-trichlorobenzène (TCB). Le débit utilisé est de 1 cm$^3$.min$^{-1}$.

Les solutions sont préparées à une concentration comprise entre 0,6 et 1 g.l$^{-1}$ (suivant la viscosité de l'échantillon), et 200 $\mu$l de solution sont injectés. L'acquisition et le traitement des données sont effectuées à l'aide d'un système composé d'un multimètre muni d'une carte "scrutateur" Keithley 199 et d'un micro-ordinateur.

Le stockage et l'interprétation des données sont effectués à l'aide d'un logiciel. Le chromatogramme est finalement stocké sous la forme d'environ 600 points de mesure. Le massif correspondant à la distribution de masses d'un échantillon de polymère comporte quelques centaines de points de mesure (suivant la dispersité de l'échantillon). La courbe d'étalonnage est construite à partir d'un jeu de 13 étalons de polystyrène (PS) à distributions étroites fournies par TosoH CORPORATION (TOKYO) : A-1 000 (Mw = 870 g.mol$^{-1}$, I=1,13) ; A-5 000 (Mw = 5 400 g.mol$^{-1}$, I=1,03) ; F-1 (Mw = 9 100 g.mol$^{-1}$, I=1,02) ; F-2 (Mw = 19 600 g.mol$^{-1}$, I=1,01) ; F-4 (Mw = 43 900 g.mol$^{-1}$, I=1,01) ; F-10 (Mw = 96 400 g.mol$^{-1}$, I=1,02) ; F-20 (Mw = 190 000 g.mol$^{-1}$, I=1,04) ; F-40 (Mw = 355 000 g.mol$^{-1}$, I=1,02) ; F-80 (Mw = 706 000 g.mol$^{-1}$, I=1,05) ; F-128 (Mw = 1 090 000 g.mol$^{-1}$, I=1,05) ; F-380 (Mw = 3 840 000 g.mol$^{-1}$, I=1,04) ; F-450 (Mw = 4 480 000 g.mol$^{-1}$, I= 1,14) et par POLYMER LABORATORIES (Church Stretton, UK) : réf. 2012-5001 (Mw = 2 100 g. mol$^{-1}$, I = 1,08).

Compte tenu de la loi de viscosité du polystyrène dans le TBC à 145°C et en appliquant l'étalonnage universel (H. Benoît et all, J. Chim. Phys. 63, 1507 (1966)), on obtient les masses réelles pour chacune des tranches du chromatogramme de l'échantillon à analyser en équivalent polyéthylène.

Lors de l'analyse d'un polyéthylène branché, pour chaque volume d'élution, on mesure la viscosité $\eta_{ib}$ dudit polyéthylène, sa masse moléculaire, et l'on peut calculer la viscosité $\eta_{il}$ qu'aurait un polyéthylène linéaire de même masse.

Le taux de branchement g' du polyéthylène est égal à la moyenne des rapports $\eta_{ib}/\eta_{il}$ obtenu pour chaque volume d'élution, en pondérant chacun desdits rapports par la concentration $C_i$ en polymère dans ledit volume d'élution selon

$$g' = \frac{\Sigma\ C_i\ (\eta_{ib}/\eta_{il})}{\Sigma\ C_i}\ ,$$

i étant supérieur à 200.

## EXEMPLES

On réalise des mélanges par malaxage en fusion d'un polyéthylène autoclave et d'un polyéthylène tubulaire.

Le polyéthylène autoclave, réalisé à une pression moyenne de 160 MPa est un homopolymère de l'éthylène présentant une densité de 0,918, un MI$_2$ de 7,5 g/min, un taux de branchement de 0,28 et une force à rupture de jonc de 28 cN. Le polyéthylène tubulaire, réalisé à une pression moyenne de 245 MPa est un homopolymère de l'éthylène présentant une densité de 0,918 et un MI$_2$ de 7,5 g/10 min, un taux de branchement de 0,48 et une force à rupture de jonc de 16 cN.

Des mélanges en diverses proportions des deux polyéthylènes ont été réalisés comme indiqué sur le tableau 1.

Les compositions ont été utilisées en extrusion couchage dans les conditions suivantes :

- support papier de marque SEGOSA de grammage 40 g/m$^2$,

- largeur de filière : 500 mm,
- ouverture de la filière : 0,7 mm,
- Distance sortie de filière-cylindres (air-gap en anglais) : 145 mm,

Le tableau 1 rassemble les résultats.

TABLEAU 1

| COMPOSITION | PE tubulaire (% poids) | 0 | 10 | 20 | 50 | 60 | 100 |
|---|---|---|---|---|---|---|---|
| | PE autoclave (% poids) | 100 | 90 | 80 | 50 | 40 | 0 |
| RETRACTATION THEORIQUE (%) | | - | 12,6 | 13,6 | 16,6 | 17,6 | - |
| RETRACTATION OBSERVEE (%) | | 11,6 | 12,4 | 12,6 | 15,6 | 16 | 21,6 |
| ETIRABILITE-LIMITE (m/min) | | 402 | 471 | 524 | > 600 | >600 | >600 |

**Revendications**

1. Composition obtenue par malaxage en fusion d'un polyéthylène autoclave et d'un polyéthylène tubulaire **caractérisée en ce que** le rapport du taux de branchement du polyéthylène tubulaire sur le taux de branchement du polyéthylène autoclave est supérieur à 1,5, le taux de branchement du polyéthylène autoclave va de 0,20 à 0,40 et le taux de branchement du polyéthylène tubulaire va de 0,43 à 0,70.

2. Composition selon la revendication 1 **caractérisée en ce qu'**elle comprend 95 à 30 % en poids de polyéthylène autoclave et 5 à 70 % en poids de polyéthylène tubulaire.

3. Composition selon l'une des revendications précédentes **caractérisée en ce que** la distribution des masses moléculaires du polyéthylène autoclave apparaît bimodale et la distribution des masses moléculaires du polyéthylène tubulaire apparaît essentiellement monomodale, lesdites distributions étant analysées en chromatographie d'exclusion stérique.

4. Composition selon l'une des revendications précédentes **caractérisée en ce que** les polyéthylènes tubulaire et autoclave présentent une force à rupture de jonc allant de 10 à 45 cN.

5. Composition selon l'une des revendications précédentes **caractérisée en ce que** les indices de fusion $MI_2$ des polyéthylènes tubulaires et autoclave, mesurés à 190°C sous 2,16 kg vont de 3 à 20 g/10 min.

6. Composition selon l'une des revendications précédentes **caractérisée en ce que** le rapport des indices de fusion $MI_2$ des polyéthylènes tubulaire et autoclave est compris entre 0,9 et 1,1 et **en ce que** la force à rupture d'un jonc en polyéthylène autoclave est supérieure à celle d'un jonc en polyéthylène tubulaire, et **en ce que** l'étirabilité limite du polyéthylène autoclave est inférieure à celle du polyéthylène tubulaire.

7. Composition selon l'une des revendications précédentes **caractérisée en ce qu'**en extrusion couchage, la rétractation observée est inférieure à la rétractation théorique calculée à partir de la moyenne arithmétique des rétractations de chacun des polyéthylènes.

8. Composition selon l'une des revendications précédentes **caractérisée en ce que** les polyéthylènes autoclave et tubulaire sont des homopolyéthylène.

9. Composition selon l'une des revendications précédentes **caractérisée en ce qu'**elle ne comprend pas d'interpolymère éthylène/α-oléfine linéaire ou substantiellement linéaire.

10. Composition selon l'une des revendications précédentes **caractérisée en ce qu'**elle consiste en un mélange d'un polyéthylène autoclave et d'un polyéthylène tubulaire.

11. Composition selon l'une des revendications précédentes **caractérisée en ce que** le polyéthylène autoclave a été réalisé entre 100 et 250 MPa et **en ce que** le polyéthylène tubulaire a été réalisé entre 200 et 350 MPa.

**12.** Film obtenu par extrusion d'une composition de l'une des revendications précédentes.

**13.** Procédé d'extrusion couchage sur un support, d'une composition de l'une des revendications 1 à 15.

**14.** Support revêtu par le procédé de la revendication précédente.

**15.** Article tel que brique de lait ou de jus de fruit, papier de boucherie, enveloppe de serviettes rafraîchissantes, réalisé à partir du support revêtu de la revendication précédente.


**Patentansprüche**

**1.** Zusammensetzung, hergestellt durch Schmelzmischen eines Autoklavpolyethylens und eines Röhrenpolyethylens, **dadurch gekennzeichnet, dass** das Verhältnis des Verzweigungsfaktors des Röhrenpolyethylens zum Verzweigungsfaktor des Autoklavpolyethylens größer als 1,5 ist, der Verzweigungsfaktor des Autoklavpolyethylens zwischen 0,20 und 0,40 liegt und der Verzweigungsfaktor des Röhrenpolyethylens zwischen 0,43 und 0,70 liegt.

**2.** Zusammensetzung nach Anspruch 1, **dadurch gekennzeichnet, dass** sie 95 % bis 30 Gew.-% Autoklavpolyethylen und 5 bis 70 Gew.-% Röhrenpolyethylen umfasst.

**3.** Zusammensetzung nach einem der vorhergehenden Ansprüche, **dadurch gekennzeichnet, dass** die Molmassenverteilung des Autoklavpolyethylens bimodal erscheint und die Molmassenverteilung des Röhrenpolyethylens im Wesentlichen monomodal erscheint, wobei die Verteilungen durch sterische Exklusionschromatographie analysiert wurden.

**4.** Zusammensetzung nach einem der vorhergehenden Ansprüche, **dadurch gekennzeichnet, dass** die Röhren- und Autoklavpolyethylene eine Reißkraft des Stabs von 10 bis 45 cN aufweisen.

**5.** Zusammensetzung nach einem der vorhergehenden Ansprüche, **dadurch gekennzeichnet, dass** die Schmelzindizes $MI_2$ der Röhren- und Autoklavpolyethylene, gemessen bei 190 °C unter 2,16 kg, zwischen 3 und 20 g/10 Min. betragen.

**6.** Zusammensetzung nach einem der vorhergehenden Ansprüche, **dadurch gekennzeichnet dass** das Verhältnis der Schmelzindizes $MI_2$ des Röhrenpolyethylens und des Autoklavpolyethylens zwischen 0,9 und 1,1 liegen und dass die Reißkraft eines Stabs Autoklavpolyethylen höher ist als die eines Stabs Röhrenpolyethylen, und dass das Dehnbarkeitslimit des Autoklavpolyethylens ist niedriger als das des Röhrenpolyethylens.

**7.** Zusammensetzung nach einem der vorhergehenden Ansprüche, **dadurch gekennzeichnet, dass** bei der Coextrusion der beobachtete Schwund geringer ist als der theoretische Schwund, berechnet anhand des arithmetischen Mittels des Schwunds von jedem der Polyethylene.

**8.** Zusammensetzung nach einem der vorhergehenden Ansprüche, **dadurch gekennzeichnet, dass** die Autoklav- vund Röhrenpolyethylene Homopolyethylene sind.

**9.** Zusammensetzung nach einem der vorhergehenden Ansprüche, **dadurch gekennzeichnet, dass** sie kein lineares oder im Wesentlichen lineares Ethylen-Interpolymer/$\alpha$-Olefin enthält.

**10.** Zusammensetzung nach einem der vorhergehenden Ansprüche, **dadurch gekennzeichnet, dass** sie aus einem Gemisch aus einem Autoklavpolyethylens und einem Röhrenpolyethylen besteht.

**11.** Zusammensetzung nach einem der vorhergehenden Ansprüche, **dadurch gekennzeichnet, dass** das Autoklavpolyethylen hergestellt wurde zwischen 100 und 250 MPa und dass das Röhrenpolyethylen hergestellt wurde zwischen 200 und 350 MPa.

**12.** Folie, hergestellt durch Extrusion einer Zusammensetzung gemäß einem der vorhergehenden Ansprüche.

**13.** Coextrusionsverfahren auf einem Trägermaterial einer Zusammensetzung gemäß einem der Ansprüche 1 bis 15.

**14.** Trägermaterial, beschichtet durch das Verfahren gemäß dem vorhergehenden Anspruch.

**15.** Artikel wie Milch- oder Fruchtsaftverpackung, Metzgerpapier, Erfrischungstuchbeutel, hergestellt aus einem Trägermaterial, das gemäß dem vorhergehenden Anspruch beschichtet ist.

**Claims**

**1.** A composition obtained by mixing in the molten condition of an autoclave polyethylene and a tubular polyethylene **characterised in that** the ratio of the degree of branching of the tubular polyethylene to the degree of branching of the autoclave polyethylene is greater than 1.5, the degree of branching of the autoclave polyethylene goes from 0.20 to 0.40 and the degree of branching of the tubular polyethylene goes from 0.43 to 0.70.

**2.** A composition according to claim 1 **characterised in that** it comprises 95 to 30% by weight of autoclave polyethylene and 5 to 70% by weight of tubular polyethylene.

**3.** A composition according to one of the preceding claims **characterised in that** the distribution of the molecular masses of the autoclave polyethylene appears bimodal and the distribution of the molecular masses of the tubular polyethylene appears essentially monomodal, said distributions being analysed in steric exclusion chromatography.

**4.** A composition according to one of the preceding claims **characterised in that** the tubular and autoclave polyethylenes have a rod breaking strength ranging from 10 to 45 cN.

**5.** A composition according to one of the preceding claims **characterised in that** the melt indices $MI_2$ of the tubular and autoclave polyethylenes measured at 190°C under 2.16 kg range from 3 to 20 g/10 min.

**6.** A composition according to one of the preceding claims **characterised in that** the ratio of the melt indices $MI_2$ of the tubular and autoclave polyethylenes is between 0.9 and 1.1 and that the breaking strength of a rod of autoclave polyethylene is higher than that of a rod of tubular polyethylene and that the limit drawability of the autoclave polyethylene is lower than that of the tubular polyethylene.

**7.** A composition according to one of the preceding claims **characterised in that** in layering extrusion the observed retraction is less than the theoretical retraction calculated from the arithmetic mean of the retractions of each of the polyethylenes.

**8.** A composition according to one of the preceding claims **characterised in that** the autoclave and tubular polyethylenes are homopolyethylene.

**9.** A composition according to one of the preceding claims **characterised in that** it does not comprise straight chain or substantially straight chain ethylene/$\alpha$-olefin interpolymer.

**10.** A composition according to one of the preceding claims **characterised in that** it consists of a mixture of an autoclave polyethylene and a tubular polyethylene.

**11.** A composition according to one of the preceding claims **characterised in that** the autoclave ethylene was produced at between 100 and 250 MPa and that the tubular polyethylene was produced at between 200 and 350 MPa.

**12.** A film obtained by extrusion of a composition of one of the preceding claims.

**13.** A process for layering extrusion on a support of a composition of one of claims 1 to 15.

**14.** A support coated by the process of the preceding claim.

**15.** An article such as a milk or fruit juice carton, paper for butchers or a pack of refreshing wipes, produced from the coated support of the preceding claim.